# EUROPÄISCHE PATENTSCHRIFT

(11) **EP 4 272 299 B1**
(45) Veröffentlichungstag und Bekanntmachung des Hinweises auf die Patenterteilung: **10.06.2026**
(21) Anmeldenummer: 21823767.5
(22) Anmeldetag: 30.11.2021
(51) Int. Cl.: H02K 5/10, H02K 5/124

(54) **ELEKTROMOTOR MIT EINEM STATORGEHÄUSE UND EINER ROTORWELLE**
ELECTRIC MOTOR HAVING A STATOR HOUSING AND A ROTOR SHAFT
MOTEUR ÉLECTRIQUE COMPRENANT UN CARTER DE STATOR ET UN ARBRE DE ROTOR

(30) Priorität: 30.12.2020 CN 202011624653; 02.02.2021 DE 102021000495
(43) Veröffentlichungstag der Anmeldung: 08.11.2023
(73) Patentinhaber: SEW-EURODRIVE GmbH & Co. KG, 76646 Bruchsal (DE)
(72) Erfinder: JINCHANG, Li, Tianjin (CN)
(86) Internationale Anmeldenummer: PCT/EP2021/025474
(87) Internationale Veröffentlichungsnummer: WO 2022/144088

(56) Entgegenhaltungen:
- CN-A- 110 198 096
- CN-A- 110 649 776
- CN-A- 111 799 925
- CN-U- 206 498 276
- FR-A1- 2 596 484
- JP-A- S63 171 134
- JP-U- S5 715 662
- JP-U- S59 176 363

## Beschreibung

Die Erfindung betrifft einen Elektromotor mit einem Statorgehäuse und einer Rotorwelle.

Es ist allgemein bekannt, dass ein Elektromotor eine zu einem Statorgehäuse des Elektromotors drehbar gelagerte Rotorwelle aufweist.

**Aus der** CN 111 799 925 A **ist als nächstliegender Stand der Technik ein Elektromotor mit Statorgehäuse bekannt.**

**Aus der** CN 110 198 096 A **ist ein Elektromotor bekannt.**

**Aus der** CN 206 498 276 U **ist eine Lageranordnung bekannt.**

**Aus der** JP S57 15662 U **ist ein Motorlager bekannt.**

**Aus der** CN 110 649 776 A **ist ein Umrichtermotor bekannt.**

**Aus der** JP S63 171134 A **ist eine Dichtanordnung für ein Lager bekannt.**

**Aus der** FR 2 596 484 A1 **ist eine Lageranordnung bekannt.**

**Aus der** JP S59 176363 U **ist eine Lüfteranordnung bekannt.**

Der Erfindung liegt daher die Aufgabe zugrunde, die Standzeit eines im industriellen Umfeld eingesetzten Elektromotors zu verbessern.

Erfindungsgemäß wird die Aufgabe bei dem Elektromotor nach den in Anspruch 1 angegebenen Merkmalen gelöst.

Wichtige Merkmale der Erfindung bei dem Elektromotor mit einem Statorgehäuse und einer Rotorwelle sind, dass ein Lagerschild mit dem Statorgehäuse verbunden ist, insbesondere drehfest verbunden ist,
wobei das Lagerschild ein Dichtschild und einen mit dem Dichtschild verbundenen Lageraufnahmering aufweist,
wobei im Lageraufnahmering ein Lager zur drehbaren Lagerung der Rotorwelle aufgenommen ist,
wobei eine Schleuderscheibe mit der Rotorwelle drehfest verbunden ist,
wobei eine Schutzkappe mit dem Lageraufnahmering verbunden ist,
wobei die Schutzkappe die Schleuderscheibe abdeckt,
wobei die Rotorwelle durch eine Ausnehmung der Schutzkappe hindurchragt.

Von Vorteil ist dabei, dass eine hohe Schutzart in einfacher Weise erreichbar ist. Somit ist die Standzeit des Elektromotors vergrößert und der effiziente Einsatz des Elektromotors sowie die Betriebssicherheit gewährleistet. Mittels der Schleuderscheibe werden von der Umgebung her eindringende Flüssigkeitspartikel abgeschleudert, von der Schutzkappe aufgefangen und nach unten abgeleitet und an einer Unterbrechung des Kragenbereiches der Schutzkappe herausgeleitet. Außerdem ist die Schutzkappe auf den Lageraufnahmering aufgesteckt und somit dicht verbunden. Zwischen Dichtschild und Schutzkappe ist vorzugsweise eine spaltfreie Verbindung erreicht.

Bei einer vorteilhaften Ausgestaltung ist im Dichtschild ein Wellendichtring aufgenommen, der zur Rotorwelle hin abdichtet. Von Vorteil ist dabei, dass das Dichtschild derart im Lageraufnahmering zentrierbar ist, dass der im Dichtschild aufgenommene Wellendichtring zur Rotorwelle hin möglichst genau, also zentrisch, zentrierbar und anordenbar ist.

**Erfindungsgemäß** ist die Schutzkappe auf den Lageraufnahmering aufgesteckt, insbesondere wobei die Schutzkappe kraftschlüssig mit dem Lageraufnahmering verbunden ist. Von Vorteil ist dabei, dass die Schutzkappe zum Lageraufnahmering und somit zum darin aufgenommenen Lager möglichst genau positionierbar ist.

**Erfindungsgemäß** drückt zumindest eine in eine radial gerichtete, in den Lageraufnahmering eingebrachte Gewindebohrung eingeschraubte Schraube mit ihrem Schraubenkopf die Schutzkappe zum Lageraufnahmering hin. Von Vorteil ist dabei, dass eine formschlüssige Sicherung mittels der Schraube die kraftschlüssige Verbindung zwischen Schutzkappe und Lagerschild, insbesondere Lageraufnahmeteil, zusätzlich absichert.

Bei einer vorteilhaften Ausgestaltung weist das Dichtschild eine Bohrung, insbesondere eine mittig im Dichtschild angeordnete Bohrung, auf, durch welche die Rotorwelle hindurchragt und auf deren Innenseite Ringnuten ausgeführt sind,
wobei die Ringachse der Ringnuten koaxial zur Drehachse der Rotorwelle ausgerichtet ist. Von Vorteil ist dabei, dass der zwischen Rotorwelle und Dichtschild vorhandene Ringspalt in axialer Richtung eine veränderliche, insbesondere periodisch veränderliche radiale Ausdehnung aufweist. Somit ist ein Labyrinth für von außen eintretende Partikel bewirkt, das aufgrund der eintretenden Strömungsfelder im Ringspalt ein großes Hindernis darstellt.

Bei einer vorteilhaften Ausgestaltung ist an einer Bohrung, insbesondere an einer mittig im Lageraufnahmering angeordneten Bohrung, das Dichtschild aufgenommen, insbesondere die somit die Bohrung des Lageraufnahmerings abdeckt. Von Vorteil ist dabei, dass das Dichtschild derart positionierbar und mit dem Lageraufnahmering verbindbar ist, dass die Ausrichtung des Wellendichtrings zur Rotorwelle hin optimiert ist.

Bei einer vorteilhaften Ausgestaltung ist die Schleuderscheibe auf die Rotorwelle aufgesteckt, insbesondere und kraftschlüssig mit der Rotorwelle verbunden. Von Vorteil ist dabei, dass die Schleuderscheibe kraftschlüssig mit der Rotorwelle verbunden ist und somit ein einfaches schnelles Herstellen des Motors ermöglicht ist.

Bei einer vorteilhaften Ausgestaltung sind die Ringnuten axial voneinander beabstandet, insbesondere axial voneinander regelmäßig beabstandet. Von Vorteil ist dabei, dass ein Ringspalt zwischen Rotorwelle und Dichtschild ausbildbar ist, der eine veränderliche, insbesondere eine periodisch veränderliche, radiale Dicke aufweist. Das dadurch erzeugbare Strömungsfeld im Ringspalt ist derart ausführbar, dass das Eindringen von Partikeln zum Innenraum des Motors hin erschwert wird. Dies gilt insbesondere für in der Umgebung des Motors auftretenden Nebel, der flüssige Partikel enthält.

**Erfindungsgemäß** ist die Schutzkappe elastisch vorgespannt auf den Lageraufnahmering gepresst und/oder aufgeschrumpft ist. Von Vorteil ist dabei, dass eine einfache dichte Verbindung herstellbar ist.

Bei einer vorteilhaften Ausgestaltung ist die Schutzkappe aus einem Kunststoff gefertigt. Von Vorteil ist dabei, dass eine kostengünstige Herstellung der Schutzkappe erreichbar ist und eine geringe Kraft beim Verbinden notwendig ist.

Bei einer vorteilhaften Ausgestaltung weist die Schutzkappe einen scheibenartigen, insbesondere lochscheibenartigen, Grundkörper auf,
insbesondere wobei die Rotorwelle durch eine Ausnehmung des Grundkörpers hindurchragt,
insbesondere wobei die Scheibe sich radial mindestens zehnmal weiter ausgedehnt ist als axial,
wobei am radial äußeren Rand des scheibenartigen Grundkörpers ein Kragenbereich angeformt ist, insbesondere der axial hervorragt. Von Vorteil ist dabei, dass der Kragenbereich auf den Lageraufnahmering aufstülpbar ist und somit dicht und mit geringem Kraftaufwand verbindbar ist.

Bei einer vorteilhaften Ausgestaltung umfasst der vom Kragenbereich in axialer Richtung überdeckte Bereich den von der Schleuderscheibe in axialer Richtung überdeckten Bereich und den von dem Dichtschild in axialer Richtung überdeckten Bereich, insbesondere und den vom Lageraufnahmering in axialer Richtung überdeckten Bereich. Von Vorteil ist dabei, dass die Schutzkappe die Schleuderscheibe und das Dichtschild samt Ringspalt und dem im Dichtschild aufgenommenen Wellendichtring gehäusebildend umgibt und/oder abdeckt.

Bei einer vorteilhaften Ausgestaltung ist der Kragenbereich in Umfangsrichtung unterbrochen ausgeführt, insbesondere also eine Unterbrechung aufweist,
wobei ein Fußteil mit dem Statorgehäuse verbunden ist,
wobei der unterbrochene Bereich in Umfangsrichtung einen Bereich überdeckt, der mit dem von dem Fußteil in Umfangsrichtung überdeckten Bereich überlappt oder von diesem umfasst. Von Vorteil ist dabei, dass der unterbrochene Bereich in der Richtung des Fußteils, also in Gravitationsrichtung nach unten, hin ausgerichtet ist und somit ein Abfließen von eingedrungener und von der Schleuderscheibe abgeschleuderter Flüssigkeit bewirkbar ist.

Bei einer vorteilhaften Ausgestaltung sind der vom Fußteil in Umfangsrichtung überdeckte Bereich und der vom Kragenbereich in Umfangsrichtung überdeckte Bereich zusammengenommen in Umfangsrichtung vollständig ununterbrochen. Von Vorteil ist dabei, dass der unterbrochene Bereich in der Richtung des Fußteils, also in Gravitationsrichtung nach unten, hin ausgerichtet ist und somit ein Abfließen von eingedrungener und von der Schleuderscheibe abgeschleuderter Flüssigkeit bewirkbar ist.

In der vorliegenden Beschreibung ist die axiale Richtung parallel zur Richtung der Drehachse der Rotorwelle ausgerichtet und die Umfangsrichtung ist auf diese Drehachse bezogen, insbesondere wobei die radiale Richtung ebenfalls auf diese Drehachse bezogen ist.

Bei einer vorteilhaften Ausgestaltung nimmt die axiale Wandstärke, insbesondere also die axiale Breite, der Schleuderscheibe mit zunehmendem Radialabstand, insbesondere also nach radial außen hin, monoton ab. Von Vorteil ist dabei, dass die Schleuderscheibe in einen an dem Dichtschild ausgeformten, radial innen liegenden Hinterschnitt hineinragt.

Bei einer vorteilhaften Ausgestaltung überlappt der von der Schleuderscheibe überdeckte axiale Bereich mit dem von dem Dichtschild überdeckten axialen Bereich. Von Vorteil ist dabei, dass die Schleuderscheibe in eine Ausnehmung, insbesondere Hinterschnitt, insbesondere in axialer Richtung geöffnete Nut des Dichtschilds hineinragt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

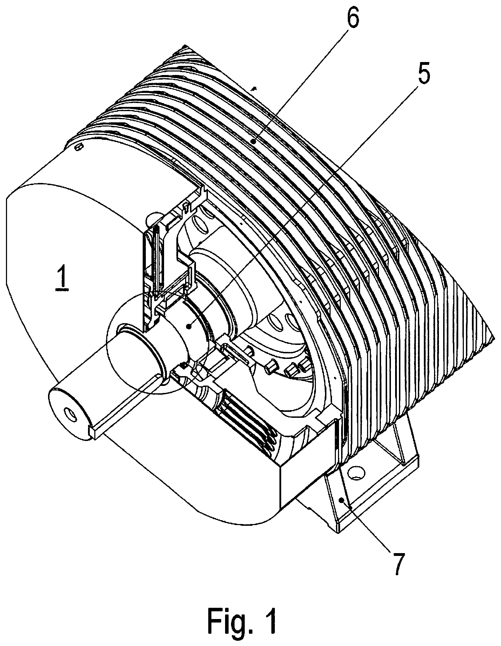

In der Figur 1 ist ein Ausschnitt eines angeschnitten dargestellten erfindungsgemäßen Elektromotors gezeigt.

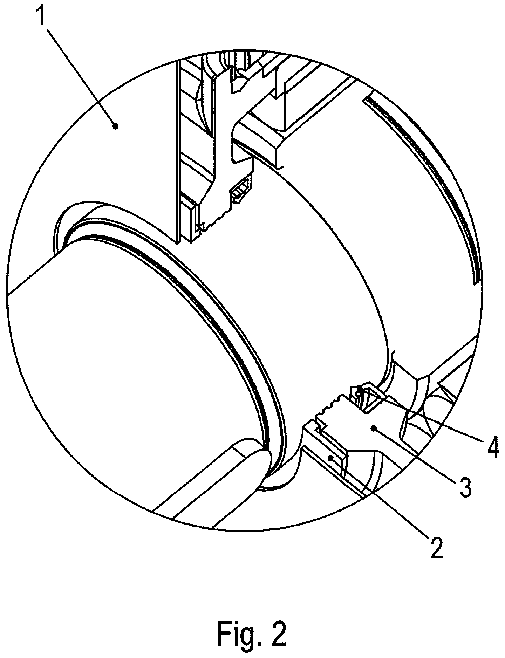

In der Figur 2 ist ein Bereich der Figur 1 vergrößert dargestellt.

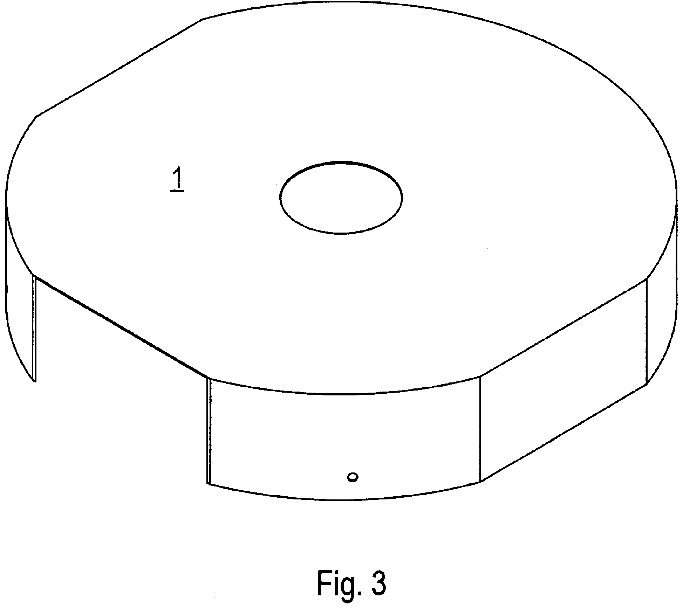

In der Figur 3 ist eine Schutzkappe 1 des Elektromotors in Schrägansicht dargestellt.

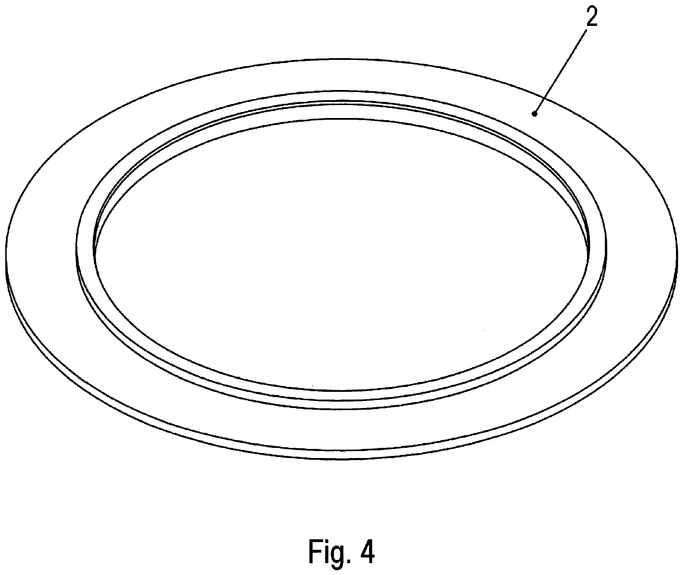

In der Figur 4 ist eine Schleuderscheibe 2 des Elektromotors in Schrägansicht dargestellt.

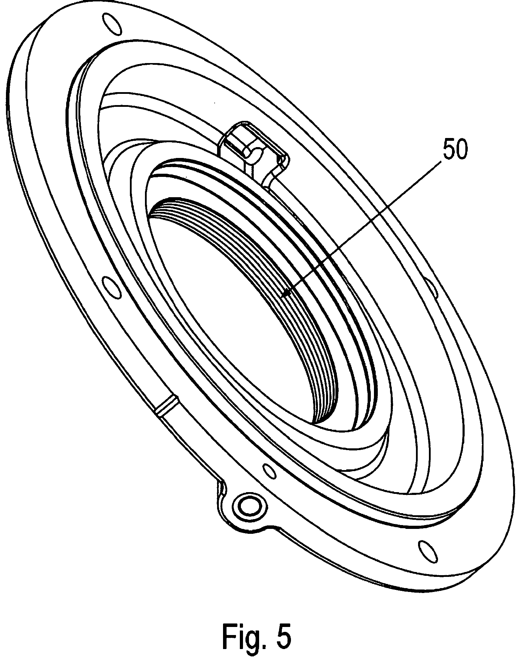

In der Figur 5 ist ein Dichtschild 3 des Elektromotors in Schrägansicht dargestellt.

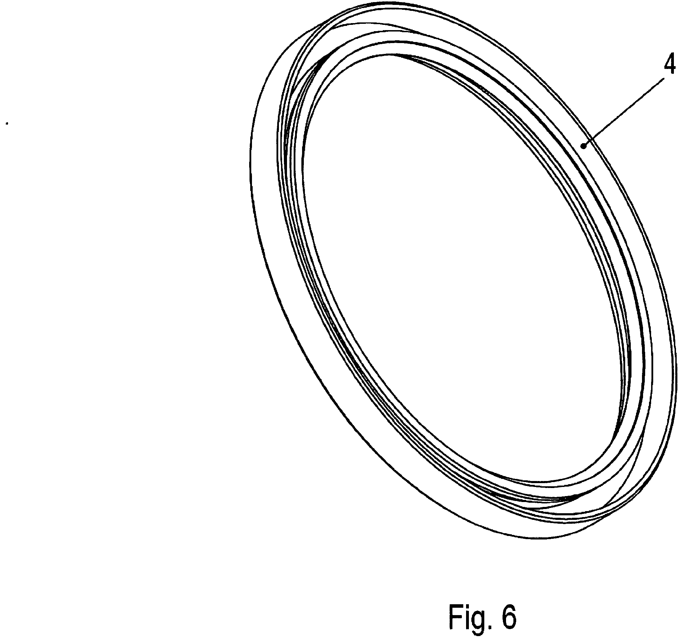

In der Figur 6 ist ein Wellendichtring 4 des Elektromotors in Schrägansicht dargestellt.

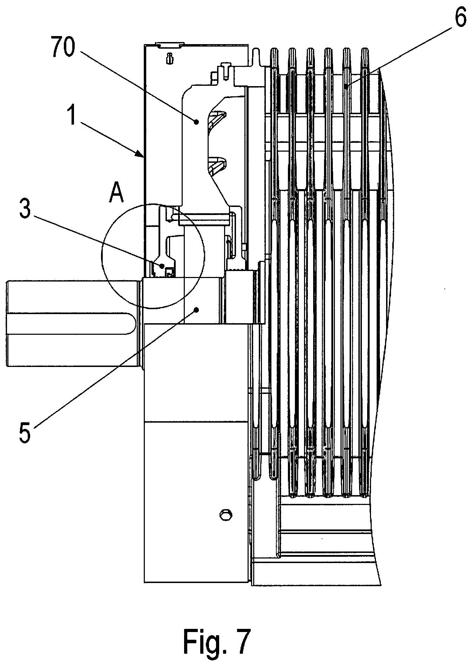

In der Figur 7 ist eine Schnittansicht des Ausschnitts des Elektromotors dargestellt.

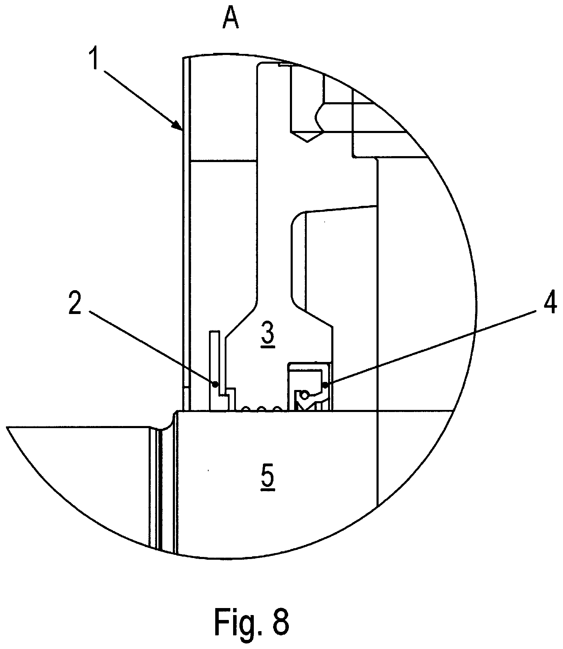

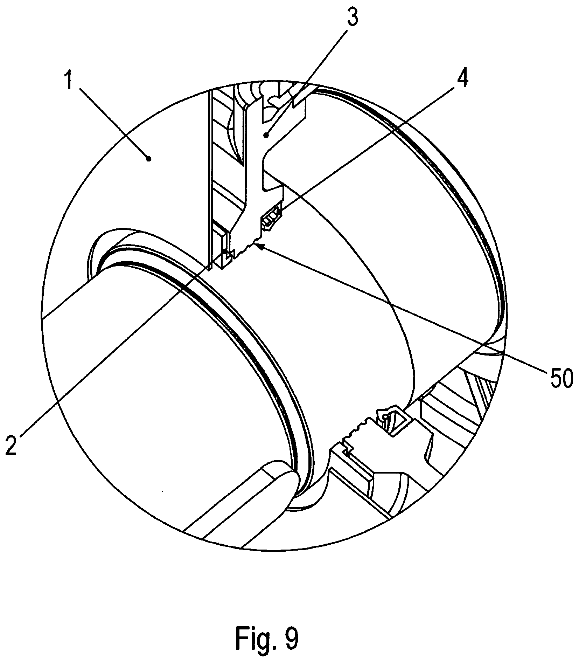

In der Figur 8 ist ein Teilbereich der Figur 7 vergrößert dargestellt.

Wie in den Figuren dargestellt, weist der Elektromotor eine Rotorwelle 5 auf, die Über Lager drehbar zu einem Statorgehäuse 6 des Elektromotors gelagert ist.

Das Statorgehäuse weist ringartige Kühlrippen auf, die in axialer Richtung, also in Drehrichtung der Rotorwelle 5, voneinander beabstandet sind, insbesondere regelmäßig voneinander beabstandet sind. Die Kühlrippen ragen also in radialer Richtung hervor und ermöglichen somit ein schnelles Ableiten von Flüssigkeiten. Die Kühlrippen sind in axialer Richtung geringer ausgedehnt als in radialer Richtung. In Umfangsrichtung sind sie ununterbrochen ausgeführt.

Ein Lager der Rotorwelle 5 ist einem Lageraufnahmering 70 aufgenommen, das mit dem Statorgehäuse 6 verbunden ist, insbesondere drehfest verbunden ist. in einer mittig im Lageraufnahmering angeordneten Bohrung ist ein Dichtschild 3 aufgenommen, insbesondere das somit die Bohrung abdeckt, aber selbst eine weitere Bohrung aufweist, durch welche die Rotorwelle 5 hindurchragt.

Im Dichtschild 3 ist ein Wellendichtring 4 aufgenommen, dessen Dichtlippe auf einem fein bearbeiteten Oberflächenbereich der Rotorwelle 5 läuft, insbesondere also zur Rotorwelle 5 hin abdichtet.

Außerdem weist das Dichtschild 3 eine mittige Bohrung auf, durch welche die Rotorwelle hindurchragt und auf deren Innenseite Ringnuten ausgeführt sind.

Die Ringachse der Ringnuten ist koaxial zu der Drehachse der Rotorwelle 5 ausgerichtet. Die Ringnuten sind axial voneinander beabstandet, insbesondere axial voneinander regelmäßig beabstandet.

Auf der vom Wellendichtring 4 abgewandten Seite des Dichtschilds 3 ist eine Schleuderscheibe 2 drehfest mit der Rotorwelle 5 verbunden, insbesondere kraftschlüssig verbunden.

Auf den Lageraufnahmering 70 ist eine Schutzkappe 1 aufgesteckt, die eine mittig angeordnete Ausnehmung aufweist, durch welche die Rotorwelle 5 hindurchragt. Zwischen der Rotorwelle 5 und der mit dem Lageraufnahmering 70 drehfest verbundenen Schutzkappe 1 ist ein enger Spalt ausgebildet.

Die Schutzkappe 1 weist einen scheibenartigen, insbesondere lochscheibenartigen, Grundkörper auf, welcher die Ausnehmung aufweist und durch welchen die Rotorwelle 5 hindurchragt. Am radial äußeren Rand des scheibenartigen Grundkörpers ist ein Kragenbereich angeformt, der sich in axialer Richtung erstreckt.

Der vom Kragenbereich in axialer Richtung überdeckte Bereich umfasst den von dem Dichtschild 3 und den vom Lageraufnahmering 70 in axialer Richtung überdeckten Bereich. Somit ist das Dichtschild 3 sowie der Lageraufnahmering 70 abgedeckt gegen Eindringen von Schmutzpartikeln aus der äußeren Umgebung.

In Umfangsrichtung weist der Kragenbereich eine Unterbrechung auf, wobei die Schutzkappe derart zum Motor ausgerichtet ist, dass die Unterbrechung nach unten hin geöffnet ist. Somit können von der Schleuderscheibe 2 abgeschleuderte Flüssigkeitsmengen an der Innenseite der Schutzkappe 1 herunterfließen bis zur Unterbrechung und von dort zur Umgebung hinaus.

Am Statorgehäuse 6 ist an der Unterseite ein Fußteil 7, insbesondere Fußplatte, angeschraubt oder einstückig, insbesondere einteilig, angegossen.

Der von dem Fußteil 7 in Umfangsrichtung überdeckte Bereich umfasst oder überlappt den von der einzigen Unterbrechung in Umfangsrichtung überdeckten Bereich. Ausgenommen die Unterbrechung weist der Kragenbereich keine weitere Unterbrechung auf. Somit ist der Kragenbereich ausreichend stabil und steif herstellbar.

Der Kragenbereich weist Teilbereiche auf, die gerundet ausgeführt sind, und weitere Teilbereiche, die eben ausgeführt sind. Die eben ausgeführten Bereiche sind vertikal ausgerichtet und ermöglichen ein besonders schnelles Abfließen von Flüssigkeiten. Die gerundeten Bereiche führen die abfließende Flüssigkeit nach unten.

Die Schutzkappe 1 wird mit zumindest einer radial gerichteten Schraube am Lageraufnahmering 70 gesichert. Hierzu ragt die Schraube durch die Schutzkappe 1 hindurch, wobei der Gewindebereich der Schraube in eine radial gerichtete, in den Lageraufnahmering 70 eingebrachte Gewindebohrung eingeschraubt ist und der Schraubenkopf der Schraube die Schutzkappe 1 zum Lageraufnahmering 70 hindrückt.

Der von der Schutzkappe 1 in axialer Richtung überdeckte Bereich umfasst den von der Schleuderscheibe 2 in axialer Richtung überdeckten Bereich und überlappt mit dem von dem Dichtschild 3 in axialer Richtung überdeckten Bereich, insbesondere aber auch den vom Lageraufnahmering 70 in axialer Richtung überdeckten Bereich.

Vorzugsweise ist die Schutzkappe 1 aus Kunststoff gefertig. Erfindungsgemäß ist die Schutzkappe elastisch vorgespannt auf den Lageraufnahmering 70 aufgepresst und/oder aufgeschrumpft. Dabei ist der Kragenbereich zur Erzeugung der elastischen Vorspannung aufgeweitet und drückt die Schutzkappe 1 auf den Lageraufnahmering 70.

Zur Bildung eines radial gerichteten Labyrinths überlappt der von der Schleuderscheibe 2 überdeckte axiale Bereich mit dem von dem Dichtschild 3 überdeckten axialen Bereich. Hierzu weist die Schleuderscheibe 2 an ihrem radial inneren Bereich eine Verbreiterung in axialer Richtung auf, die als Grundring bezeichenbar ist, an den eine axial dünnere Scheibe angeformt ist, wobei die Schleuderscheibe 2 einstückig, insbesondere einteilig, ausgeformt ist. Die axiale Wandstärke, insbesondere also die axiale Breite, nimmt mit zunehmendem Radialabstand monoton ab.

Bei weiteren erfindungsgemäßen Ausführungsbeispielen wird der Kragenbereich aus ebenen aneinander angrenzenden Flächenbereichen zusammengesetzt. Dabei weisen die aneinander angrenzenden Flächenbereiche vorzugsweise stets den gleichen Winkel zueinander auf.

Bei weiteren erfindungsgemäßen Ausführungsbeispielen ist die in der Schutzkappe 1 ausgebildete, in der Schutzkappe mittig angeordnete Ausnehmung mit der Unterbrechung verbunden, so dass also die in der Schutzkappe mittig angeordnete Ausnehmung in die Unterbrechung mündet. Auf diese Weise ist Material einsparbar und eine einfache Herstellung ermöglicht.

### Bezugszeichenliste

1 Schutzkappe
2 Schleuderscheibe
3 Dichtschild
4 Wellendichtring
5 Rotorwelle
6 Statorgehäuse
7 Fußteil
50 Ringnuten
70 Lageraufnahmering

## Patentansprüche

1. Elektromotor mit einem Statorgehäuse und einer Rotorwelle,
wobei ein Lagerschild mit dem Statorgehäuse verbunden ist, insbesondere drehfest verbunden ist,
wobei das Lagerschild ein Dichtschild (3) und einen mit dem Dichtschild (3) verbundenen Lageraufnahmering (70) aufweist,
wobei im Lageraufnahmering (70) ein Lager zur drehbaren Lagerung der Rotorwelle aufgenommen ist,
**wobei** eine Schleuderscheibe mit der Rotorwelle drehfest verbunden ist,
wobei eine Schutzkappe mit dem Lageraufnahmering verbunden ist,
wobei die Schutzkappe die Schleuderscheibe abdeckt,
wobei die Rotorwelle durch eine Ausnehmung der Schutzkappe hindurchragt,
**dadurch gekennzeichnet, dass**
**die Schutzkappe auf den Lageraufnahmering aufgesteckt ist, insbesondere wobei die Schutzkappe kraftschlüssig mit dem Lageraufnahmering verbunden ist,**
**wobei zumindest eine in eine radial gerichtete, in den Lageraufnahmering eingebrachte Gewindebohrung eingeschraubte Schraube mit ihrem Schraubenkopf die Schutzkappe zum Lageraufnahmering hindrückt,**
**wobei die Schutzkappe elastisch vorgespannt auf den Lageraufnahmering gepresst und/oder aufgeschrumpft ist.**

2. Elektromotor nach Anspruch 1,
**dadurch gekennzeichnet, dass**
im Dichtschild ein Wellendichtring aufgenommen ist, der zur Rotorwelle hin abdichtet.

3. Elektromotor nach einem der vorangegangenen Ansprüche,
**dadurch gekennzeichnet, dass**
das Dichtschild eine Bohrung, insbesondere eine mittig im Dichtschild angeordnete Bohrung, aufweist, durch welche die Rotorwelle hindurchragt und auf deren Innenseite Ringnuten ausgeführt sind,
wobei die Ringachse der Ringnuten koaxial zur Drehachse der Rotorwelle ausgerichtet ist.

4. Elektromotor nach einem der vorangegangenen Ansprüche,
**dadurch gekennzeichnet, dass**
an einer Bohrung, insbesondere an einer mittig im Lageraufnahmering angeordneten Bohrung, das Dichtschild aufgenommen ist, insbesondere die somit die Bohrung des Lageraufnahmerings abdeckt.

5. Elektromotor nach einem der vorangegangenen Ansprüche,
**dadurch gekennzeichnet, dass**
die Schleuderscheibe ist auf die Rotorwelle aufgesteckt, insbesondere und kraftschlüssig mit der Rotorwelle verbunden.

6. Elektromotor nach Anspruch 3,
**dadurch gekennzeichnet, dass**
die Ringnuten axial voneinander beabstandet sind, insbesondere axial voneinander regelmäßig beabstandet.

7. Elektromotor nach einem der vorangegangenen Ansprüche,
**dadurch gekennzeichnet, dass**
die Schutzkappe aus einem Kunststoff gefertigt ist.

8. Elektromotor nach einem der vorangegangenen Ansprüche,
**dadurch gekennzeichnet, dass**
die Schutzkappe einen scheibenartigen, insbesondere lochscheibenartigen, Grundkörper aufweist,
insbesondere wobei die Rotorwelle durch eine Ausnehmung des Grundkörpers hindurchragt,
wobei am radial äußeren Rand des scheibenartigen Grundkörpers ein Kragenbereich angeformt ist, insbesondere der axial hervorragt.

9. Elektromotor nach Anspruch 8,
**dadurch gekennzeichnet, dass**
der vom Kragenbereich in axialer Richtung überdeckte Bereich den von der Schleuderscheibe in axialer Richtung überdeckten Bereich umfasst und den von dem Dichtschild in axialer Richtung überdeckten Bereich und den vom Lageraufnahmering in axialer Richtung überdeckten Bereich umfasst.

10. Elektromotor nach Anspruch 8 oder 9,
**dadurch gekennzeichnet, dass**
der Kragenbereich in Umfangsrichtung unterbrochen ausgeführt ist, insbesondere also eine Unterbrechung aufweist,
**wobei ein Fußteil an der Unterseite des Statorgehäuses (6) angeschraubt oder einstückig, insbesondere einteilig, angegossen,**
wobei der unterbrochene Bereich in Umfangsrichtung einen Bereich überdeckt, der mit dem von dem Fußteil in Umfangsrichtung überdeckten Bereich überlappt oder von diesem umfasst ist.

11. Elektromotor nach Anspruch 10,
**dadurch gekennzeichnet, dass**
der vom Fußteil in Umfangsrichtung überdeckte Bereich und der vom Kragenbereich in Umfangsrichtung überdeckte Bereich zusammengenommen in Umfangsrichtung vollständig ununterbrochen sind.

12. Elektromotor nach einem der vorangegangenen Ansprüche,
**dadurch gekennzeichnet, dass**
die axiale Richtung parallel zur Richtung der Drehachse der Rotorwelle ausgerichtet ist und die Umfangsrichtung auf diese Drehachse bezogen ist, insbesondere wobei die radiale Richtung ebenfalls auf diese Drehachse bezogen ist.

13. Elektromotor nach einem der vorangegangenen Ansprüche,
**dadurch gekennzeichnet, dass**
die axiale Wandstärke, insbesondere also die axiale Breite, der Schleuderscheibe mit zunehmendem Radialabstand monoton abnimmt,
und/oder dass
der von der Schleuderscheibe überdeckte axiale Bereich mit dem von dem Dichtschild überdeckten axialen Bereich überlappt.

## Claims

1. Electric motor having a stator housing and a rotor shaft,
wherein a bearing shield is connected, in particular non-rotatably connected, to the stator housing,
wherein the bearing shield comprises a sealing shield (3) and a bearing-accommodating ring (70) connected to the sealing shield (3),
wherein a bearing for rotatably bearing the rotor shaft is accommodated in the bearing-accommodating ring (70),
wherein a slinger is connected to the rotor shaft for conjoint rotation,
wherein a protective cap is connected to the bearing-accommodating ring,
wherein the protective cap covers the slinger,
wherein the rotor shaft projects through an opening in the protective cap,
**characterized in that**
the protective cap is mounted on the bearing-accommodating ring, in particular wherein the protective cap is connected to the bearing-accommodating ring with a force fit,
wherein at least one screw, which is screwed into a radially directed threaded bore formed in the bearing-accommodating ring, presses the protective cap toward the bearing-accommodating ring by means of its screw head,
wherein the protective cap is pressed onto the bearing-accommodating ring by elastic pretension and/or is shrunk onto it.

2. Electric motor according to claim 1,
**characterized in that**
a shaft sealing ring, which seals with respect to the rotor shaft, is accommodated in the sealing shield.

3. Electric motor according to any of the preceding claims,
**characterized in that**
the sealing shield has a bore, in particular a bore arranged centrally in the sealing shield, through which the rotor shaft projects and on the inside of which annular grooves are provided,
wherein the ring axis of the annular grooves is oriented coaxial to the axis of rotation of the rotor shaft.

4. Electric motor according to any of the preceding claims,
**characterized in that**
the sealing shield is received in a bore, in particular in a bore arranged centrally in the bearing-accommodating ring, and in particular thus covers the bore of the bearing-accommodating ring.

5. Electric motor according to any of the preceding claims,
**characterized in that**
the slinger is mounted on the rotor shaft, and in particular is connected to the rotor shaft with a force fit.

6. Electric motor according to claim 3,
**characterized in that**
the annular grooves are axially spaced apart from each other, in particular are axially spaced apart from each other at regular intervals.

7. Electric motor according to any of the preceding claims,
**characterized in that**
the protective cap is made of a plastics material.

8. Electric motor according to any of the preceding claims,
**characterized in that**
the protective cap has a disk-like, in particular perforated disk-like, main body,
in particular wherein the rotor shaft projects through an opening in the main body,
wherein a collar region is formed on the radially outer edge of the disk-like main body, which collar region in particular projects axially.

9. Electric motor according to claim 8,
**characterized in that**
the region covered by the collar region in the axial direction encompasses the region covered by the slinger in the axial direction and the region covered by the sealing shield in the axial direction and the region covered by the bearing-accommodating ring in the axial direction.

10. Electric motor according to claim 8 or 9,
**characterized in that**
the collar region is designed in a manner interrupted in the circumferential direction, that is to say in particular has one interruption,
wherein a foot part is screwed onto the underside of the stator housing (6) or is cast in one piece therewith, in particular as a single part,
wherein the interrupted region in the circumferential direction covers a region which overlaps with or is encompassed by the region covered by the foot part in the circumferential direction.

11. Electric motor according to claim 10,
**characterized in that**
the region covered by the foot part in the circumferential direction and the region covered by the collar region in the circumferential direction, taken together, are entirely uninterrupted in the circumferential direction.

12. Electric motor according to any of the preceding claims,
**characterized in that**
the axial direction is oriented parallel to the direction of the axis of rotation of the rotor shaft, and the circumferential direction is relative to this axis of rotation, in particular wherein the radial direction is also relative to this axis of rotation.

13. Electric motor according to any of the preceding claims,
**characterized in that**
the axial wall thickness, that is to say in particular the axial width, of the slinger decreases monotonically as the radial distance increases,
and/or **in that**
the axial region covered by the slinger overlaps with the axial region covered by the sealing shield.

## Revendications

1. Moteur électrique avec un carter de stator et un arbre de rotor, dans lequel un flasque de palier est relié au carter de stator, en particulier relié de manière fixe en rotation, le flasque de palier présentant un flasque d'étanchéité (3) et un anneau de réception de palier (70) relié au flasque d'étanchéité (3), dans lequel un palier pour le support rotatif de l'arbre de rotor est reçu dans l'anneau de réception de palier (70), un disque centrifuge étant relié de manière fixe en rotation à l'arbre de rotor, un capuchon de protection étant relié à l'anneau de réception de palier, le capuchon de protection recouvrant le disque centrifuge, l'arbre de rotor traversant un évidement du capuchon de protection, **caractérisé en ce que** le capuchon de protection est emboîté sur l'anneau de réception de palier, en particulier le capuchon de protection étant relié de manière à assurer une liaison par friction avec l'anneau de réception de palier, au moins une vis vissée dans un trou taraudé introduit orienté radialement dans l'anneau de réception de palier, presse le capuchon de protection contre l'anneau de réception de palier avec sa tête de vis, le capuchon de protection étant pressé sur l'anneau de réception de palier avec une précontrainte élastique et/ou fretté sur celui-ci.

2. Moteur électrique selon la revendication 1, **caractérisé en ce qu'**une bague d'étanchéité d'arbre est reçue dans le flasque d'étanchéité assurant l'étanchéité vers l'arbre de rotor.

3. Moteur électrique selon l'une des revendications précédentes, **caractérisé en ce que** le flasque d'étanchéité présente un perçage, en particulier un perçage disposé au centre dans le flasque d'étanchéité, par lequel passe l'arbre de rotor et sur la face interne duquel des rainures annulaires sont réalisées,
l'axe annulaire des rainures annulaires étant aligné coaxialement à l'axe de rotation de l'arbre de rotor.

4. Moteur électrique selon l'une des revendications précédentes, **caractérisé en ce que** sur un perçage, en particulier sur un perçage disposé au centre dans l'anneau de réception de palier, le flasque d'étanchéité est logé, en particulier recouvrant ainsi le perçage de l'anneau de réception de palier.

5. Moteur électrique selon l'une des revendications précédentes, **caractérisé en ce que** le disque centrifuge est emboîté sur l'arbre de rotor, en particulier et relié de manière à assurer une liaison par friction avec l'arbre de rotor.

6. Moteur électrique selon la revendication 3, **caractérisé en ce que** les rainures annulaires sont espacées axialement les unes des autres, en particulier espacées régulièrement axialement les unes des autres.

7. Moteur électrique selon l'une des revendications précédentes, **caractérisé en ce que** le capuchon de protection est fabriqué en matière plastique.

8. Moteur électrique selon l'une des revendications précédentes, **caractérisé en ce que** le capuchon de protection présente un corps de base en forme de disque, en particulier en forme de disque perforé, en particulier l'arbre de rotor traversant un évidement du corps de base, une zone de collerette étant moulée au bord extérieur radial du corps de base en forme de disque, en particulier dépassant axialement.

9. Moteur électrique selon la revendication 8, **caractérisé en ce que** la zone recouverte en direction axiale par la zone de collerette comprend la zone recouverte en direction axiale par le disque centrifuge et comprend la zone recouverte en direction axiale par le flasque d'étanchéité et comprend la zone recouverte en direction axiale par l'anneau de réception de palier.

10. Moteur électrique selon la revendication 8 ou 9, **caractérisé en ce que** la zone de collerette est réalisée de manière interrompue en direction périphérique, en particulier présente donc une interruption, une partie de pied étant vissée sur la face inférieure du carter de stator (6) ou moulée d'un seul tenant, en particulier moulée d'une seule pièce, la zone interrompue en direction périphérique recouvrant une zone qui chevauche la zone recouverte en direction périphérique par la partie de pied ou qui est comprise par celle-ci.

11. Moteur électrique selon la revendication 10, **caractérisé en ce que** la zone recouverte en direction périphérique par la partie de pied et la zone recouverte en direction périphérique par la zone de collerette, prises ensemble, sont complètement ininterrompues en direction périphérique.

12. Moteur électrique selon l'une des revendications précédentes, **caractérisé en ce que** la direction axiale est alignée parallèlement à la direction de l'axe de rotation de l'arbre de rotor et la direction périphérique est relative à cet axe de rotation, en particulier la direction radiale étant également relative à cet axe de rotation.

13. Moteur électrique selon l'une des revendications précédentes, **caractérisé en ce que** l'épaisseur de paroi axiale, en particulier donc la largeur axiale du disque centrifuge diminue de façon monotone avec l'augmentation de la distance radiale, et/ou que la zone axiale recouverte par le disque centrifuge chevauche la zone axiale recouverte par le flasque d'étanchéité.
